# EUROPEAN PATENT SPECIFICATION

(11) **EP 2 831 312 B1**
(45) Date of publication and mention of the grant of the patent: **06.11.2019**
(21) Application number: 13709185.6
(22) Date of filing: 11.03.2013
(51) Int. Cl.: H01M 8/083, H01M 8/0656, H01M 4/88, C25B 13/04, H01M 8/0232, H01M 8/0239, H01M 8/0245, H01M 8/0289, H01M 4/74, H01M 4/86, C25B 9/20, H01M 8/0293

(54) **ASSEMBLY OF A POROUS METAL DIFFUSION SUBSTRATE AND A POLYMERIC SEPARATOR MEMBRANE**
ANORDNUNG EINES PORÖSEN METALLDIFFUSIONSSUBSTRATS UND EINE POLYMERE TRENNMEMBRAN
ASSEMBLAGE D'UN SUBSTRAT DE DIFFUSION DE MÉTAL POREUX ET D'UNE MEMBRANE DE SÉPARATION POLYMÈRE

(30) Priority: 28.03.2012 EP 12161650; 28.03.2012 US 201261616437 P
(43) Date of publication of application: 04.02.2015
(73) Proprietor: Agfa-Gevaert N.V., 2640 Mortsel (BE)
(72) Inventor: DEKEMPENEER, Erik, B-2390 Oostmalle (BE); SCHILDERMANS, Inge, B-8510 Marke (BE); VANBRABANT, Johan, B-8550 Zwevegem (BE); HONG, Bo, Jiangsu 214434 (CN); VANMAELE, Luc, B-9080 Lochristi (BE); DESIE, Guido, B-3020 Veltem-Beisem (BE); MUES, Willem, B-3120 Tremelo (BE)
(74) Representative: Viaene, Kris
(86) International application number: PCT/EP2013/054882
(87) International publication number: WO 2013/143833

(56) References cited:
- WO-A1-01/28011
- DE-A1- 10 318 398
- JP-A- 2000 260 441
- JP-A- 2004 300 451
- US-A1- 2006 159 982
- US-A1- 2008 248 360

## Description

### Technical Field

The invention relates to assemblies of a porous metallic gas diffusion substrate and a polymeric separator membrane, e.g. for use in alkaline electrolysers and in alkaline fuel cells. The invention further relates to a method for the production of such an assembly.

### Background Art

Electrolysers and fuel cells comprise electrodes (anodes and cathodes) and a separator, impervious to gas at least in operating conditions, separating the anode and the cathode. The separator can be a polymeric separator membrane. Since fuel and reaction products are available in gaseous and liquid state, the electrodes must provide the means to allow the diffusion of these fuel and reaction products to and from the reaction zone. This can be realized by using electrodes with an open channel structure, e.g. mesh, stretch metal or porous metal substrate. A catalyst can be used, wherein the catalyst is provided on the electrode or on the separator (e.g. on a polymeric separator membrane). The porous metal substrate and - if present - the catalyst form part of the electrode. It is preferred that the reactive sites of the electrodes are in close contact with the membrane for highest efficiency of the electrolyser or fuel cell.

It is current practice to manufacture a separator membrane and to manufacture porous substrates separately. A catalyst can be provided on the separator membrane or on the porous substrates. The separator membrane and the porous substrate are combined in a separate process into a so-called membrane-electrode assembly (MEA) that is used in the electrolyser or in the fuel cell.

For use in alkaline electrolysers, polymeric separator membranes can be used that are gas tight when filled with wet electrolyte. Examples are membranes that comprise a particulate inorganic hydrophilic material in an organic polymeric binder, see e.g. EP0232923A. The document describes a method for preparing an ion-permeable diaphragm comprising an organic fabric embedded in a film forming mixture of a particulate inorganic hydrophilic material and an organic polymeric binder.

WO 93/15529 describes a method for making a porous membrane for alkaline electrolysers comprising the steps of making a suspension from a solution of an organic binder (preferably polysulphone and use of polyvinyl pyrrolidone as pore-forming agent) and a metal oxide or metal hydroxide (preferably zirconium oxide), applying the suspension on a support by extrusion and removing the solvent by extraction through immersion in an organic non-solvent. Other methods and compositions are described e.g. in WO 2006/15462, WO 2009/147084 and WO 2009/147086. In order to have an adequate polymeric separator membrane, a reinforcing web or reinforcing fabric is required in the polymeric separator membrane. Otherwise, problems arise in the production of the membrane electrode assembly due to limited dimensional stability of the polymeric separator membrane. Double sided coating of a reinforcing web or reinforcing fabric for the production of a separator membrane is disclosed in WO 2006/015462, WO 2009/147084 and WO 2009/9147086. The presence of the reinforcing web or reinforcing fabric has drawbacks for the performance of the electrochemical cell. Another drawback is that two coating processes or a double sided coating process are required to make the polymeric separator membrane reinforced with a web of fabric.

It is a problem that the production of the stack of assemblies of the porous gas diffusion layer with the membrane is complex. An assembly is made today by pressing the gas diffusion layers and the membrane together. Multiple assemblies are further combined together into a stack. The membrane needs to be perfectly flat at this assembly process. If the flatness is not achieved, performance (efficiency) and lifetime of the electrochemical cell are negatively affected. In the prior art, the flatness can be realized by means of the use of a reinforcing carrier web of fabric in the membrane. The presence of a supporting substrate in the membrane also results in a thicker membrane than required functionally and in a reduction of the efficiency of the electrolyser or fuel cell using such a membrane. Furthermore, a thicker membrane leads to increased dimensions of the electrolyser stack which is negative in terms of machine footprint. Moreover, the reinforcing carrier web is usually a polymeric fabric which limits the maximum operational temperature of the electrolyser.

It is a drawback of the prior art that the membrane production and the production of the assembly of the membrane and the gas diffusion layer is in different steps.

A high performance of the system - expressed in performance per unit of area of the membrane surface - is required by users of electrolysers and fuel cells.

### Disclosure of Invention

A first objective of the invention is to provide an assembly of a porous metallic gas diffusion substrate and a polymeric separator membrane that results in higher efficiency when used in a fuel cell or in an electrolyser.

It is a second objective of the invention to provide an assembly of two porous metallic gas diffusion substrates with in between a polymeric separator membrane that results in higher efficiency when used in a fuel cell or in an electrolyser.

It is another objective of the invention to provide a production method for an assembly of a porous metallic gas diffusion substrate and a polymeric separator membrane in which the polymeric separator membrane is an ion-permeable separator that is gastight when saturated with electrolyte. The result is higher energy efficiency when used in an alkaline fuel cell or in an alkaline electrolyser. The benefits of the production method include one-step roll to roll production of an assembly of a porous metallic gas diffusion substrate and a polymeric separator membrane.

It is another objective of the invention to provide an assembly of a porous metallic gas diffusion substrate and a polymeric separator membrane of reduced thickness that results in reduced machine footprint.

It is another objective of the invention to provide an assembly of porous metallic gas diffusion substrate and a polymeric separator membrane that allow operation of the electrolyser at increased temperature resulting in higher efficiency of the electrolyser.

It is another objective of the invention to provide an inline production method to produce an assembly of two porous metallic gas diffusion substrates with in between a polymeric separator membrane.

According to a first aspect of the invention an assembly is provided of a porous metallic gas diffusion substrate and a polymeric separator membrane for use in an alkaline electrolyser or alkaline fuel cell. The polymeric separator membrane comprises inorganic hydrophilic particulates dispersed in an organic polymeric binder and is gas tight when filled with electrolyte. The polymeric separator membrane is penetrating into at least a top portion of the porous metallic gas diffusion substrate.

Preferably, the polymeric separator membrane is devoid of a reinforcing web that is incorporated in the polymeric separator membrane, or the polymeric separator is devoid of a reinforcing fabric that is incorporated in the polymeric separator membrane.

The assembly according to the first aspect of the invention is providing a higher efficiency when used in an alkaline hydrolyser or fuel cell compared to prior art products. The increased efficiency is thanks to a synergetic combination of a number of elements: increased stability, maintaining high flow rate of the separator membrane, the flatness of the membrane, the membrane can be made thinner and the contact between separator membrane and electrode is more intense (e.g. via a partial penetration of the membrane into the top portion of the porous metallic gas diffusion substrate) and higher maximum operational temperature.

The porous metallic gas diffusion substrate which is a functional element for the electrochemical cell acts at the same time as reinforcement for the ion-permeable separator membrane. In addition, the flatness and increased stability of the separator membrane is ensured by the invention. Absence of a supporting web or supporting fabric incorporated in the polymeric separator membrane has the benefit that the electrolyser can be operated at higher temperature, resulting in increased performance and efficiency.

The porous metallic gas diffusion substrate can be an open cell porous metal substrate. The porous metallic gas diffusion substrate can e.g. comprise sintered metal powder webs or expanded metal plates, more preferably sintered or unsintered metal fiber webs. If the polymeric separator membrane is contacting an unsintered or sintered metal fiber web of the porous metallic gas diffusion substrate, it is penetrating into at least a top portion of the unsintered or sintered metal fiber web.

The porous metallic gas diffusion substrate can be provided with a (precious) metal, metal oxide or organic metallic catalyst on the side onto which the polymeric separator membrane is formed.

The polymeric separator membrane of the invention can be a polymeric membrane layer that has a porous structure, is wettable and swellable with an electrolyte solution, that is sufficiently gastight when saturated with an electrolyte solution such that mixing of gases formed during the electrolysis is prevented, and is capable of transporting ions with low electrical resistance.

The polymeric membrane layer preferably comprises at least a polymer and inorganic particles (preferably zirconium oxide) dispersed in the polymeric membrane layer. Preferred organic binders are polysulphone and preferred use in production is made of polyvinyl pyrrolidone as pore-forming agent. The polymeric membrane layer can be prepared by coating a paste layer onto the substrate, followed by a phase inversion process in the coated layer to form a porous structure in that layer. The structure and ion conductivity of such membrane separators can be improved if dispersed zirconium oxide particles are incorporated. The weight ratio of the zirconium oxide particles with respect to the pore-forming polymer is preferably in the range of 2:1 to 19:1.

The depth of the penetration of the polymeric separator membrane in at least a top portion of the porous metallic gas diffusion substrate is preferably higher than the average diameter of the pore size in the porous metallic gas diffusion substrate and more preferably higher than the average diameter of the pore size in the top portion of the porous metallic diffusion substrate (meaning the portion of the metallic substrate which is in contact with the polymeric separator membrane). The average pore size of a porous metallic gas diffusion substrate can be determined by means of the bubble point method, according to ASTM E128-61, equivalent to ISO 4003.

Preferably, the penetration depth is less than 25% of the thickness of the porous metal diffusion substrate, more preferable less than 10%. Preferably, the penetration depth is higher than 1% of the thickness of the porous metal diffusion substrate.

A level of penetration is beneficial as it creates an intimate contact between electrode (and its reactive sites) and the polymeric separator membrane. The result is increased performance, e.g. in terms of reduced voltage drop at any given current density (leading to improved energy efficiency of the system). An excessive penetration depth is less preferred, as it blocks part of the porous metal diffusion substrate.

The porous metallic gas diffusion substrate can be a multilayer material. The multilayer material can be formed by different materials, e.g. a woven metal screen with a sintered metal fiber web on it; or be formed by same materials, e.g. multiple layers of metal fiber webs, e.g. metal fiber webs of different fiber types (diameters, lengths, chemical type or alloys) or porosity.

In a preferred embodiment, the porous metallic gas diffusion substrate comprises a sintered or an unsintered metal fiber web, e.g. comprising nickel, titanium, stainless steel, zirconium or fibers of alloys thereof, and of any other metal alloy known to be compatible with use in alkaline environments.

For alkaline electrolysers, nickel fibers are most preferred because of the reactivity of nickel in water electrolysis in alkaline environment, which, when using the assembly of the invention, makes it possible to obtain high efficiency, even without using a catalyst. Preferable equivalent metal fiber diameters are 5 to 100 µm, more preferably 20 - 50 µm. With equivalent diameter is meant the diameter of a circle that has the same surface as the cross section of the metal fibers.

The cross section of the metal fibers can be round or can be polygonal (e.g. rectangular, hexagonal, triangular, square). The metal fibers can be bundle drawn, can be produced via shaving or via machining, as is known in the art.

Average fibre lengths of the metal fibres can be between 1 and 100 mm, preferably between 5 and 50 mm.

A preferred porosity range of the porous metallic gas diffusion substrate is 50 to 95%, more preferably 60 to 80%, resulting in the good combination of properties for best efficiency of the alkaline hydrolyser or alkaline fuel cell.

The porous metallic gas diffusion substrate can comprise several layers, e.g. several layers of sintered on unsintered metal fiber webs, e.g. two layers, e.g. three layers. The layers can have the same or a different structure and/or composition, e.g. layers with different porosity.

The porous metallic gas diffusion substrate can comprise one or more mesh layers (e.g. woven metal meshes). For instance, the meshes (e.g. 1 to 6 meshes, preferably 2 to 4 meshes) can be co-sintered with one or more layers of metal fibers webs.

In a further preferred embodiment, the metallic gas diffusion substrate comprises a number of fiber web layers, e.g. two fiber webs, wherein part of or all the fiber web layers have different physical properties.

Metallic gas diffusion substrates that contain a number of different sintered or unsintered metal fiber web layers can be used. It is preferred that a layer with finer fibers and/or lower porosity is in contact with the polymeric separator membrane in order to provide a good and smooth contact as finer fibers provide more contact points between diffusion substrate and separator membrane. More homogenous contact and equal pressure drop over the separator membrane is a result, increasing the efficiency of the electrolyser or fuel cell. Other layers of the metallic gas diffusions substrates can comprise coarser fibers and/or have higher porosity levels, beneficial for the flow through of liquid and gaseous products. The use of coarser fibers provides stability and integrity of the metallic gas diffusion substrate and hence also of the electrolyser or fuel cell stack.

In a more preferred embodiment in which the metallic gas diffusion substrate comprises a number of fiber web layers, the two sides of the metallic gas diffusion substrate have a different average pore size and the polymeric separator membrane is positioned on the side of the metallic gas diffusion substrate with the smallest average pore size.

According to a second aspect of the invention an assembly is provided of two porous metallic gas diffusion substrates with in between a polymeric separator membrane. The assembly is suited for use in an electrolyser or in a fuel cell. The assembly comprises an assembly of a porous metallic gas diffusion substrate and a polymeric separator membrane as in the first aspect of the invention and a second porous metallic gas diffusion substrate. The polymeric separator membrane is positioned in between both metallic gas diffusion substrates. The second porous metallic gas diffusion substrate can be selected from the same group of candidates as the metallic gas diffusion substrate of the first aspect of the invention. Preferably, both metallic gas diffusion substrates are the same.

Preferably, the polymeric separator membrane of the assembly of two porous metallic gas diffusion substrates with in between a polymeric separator membrane is penetrating at least into a top portion of the second porous metallic gas diffusion substrate. The benefit is a further increased efficiency of the electrolyser or fuel cell using such an assembly.

According to a third aspect of the invention, a method is provided for the production of an assembly of a porous metallic gas diffusion substrate and a polymeric separator membrane as in the first aspect of the invention. The method comprises the steps of
- providing a porous metallic gas diffusion substrate,
- and coating a paste comprising a polymer binder and inorganic hydrophilic particles dispersed therein onto the porous metallic gas diffusion substrate in order to form a polymeric separator membrane.

With "coating" is meant the application of a layer of paste on a side of the porous metallic gas diffusion layer. Any known method can be used, e.g. knife or doctor blade coating, extrusion coating, slot coating, roller coating...

An anti-wetting agent can be provided on the porous metallic gas diffusion substrate prior to coating the paste onto it, in order to restrict the extent of penetration of the paste into the metallic substrate.

Preferably for the invention, the full functional surface of the first porous metallic gas diffusion substrate will be coated to form a polymeric separator membrane.

Preferably, the coating is performed in one single coating operation. Alternatively, the coating can be performed in different steps in which each time a layer of paste (the same or a different paste) is applied.

In a preferred embodiment of the third aspect of the invention, the paste comprises a solvent and the method comprises the additional step of evaporating at least part of the solvent of the paste after coating the paste onto the porous metallic gas diffusion substrate. The evaporation of the solvent can be in part or in full.

In a preferred embodiment of the third aspect of the invention, the method comprises the additional step of coagulating the paste after it has been coated onto the porous metallic gas diffusion substrate. The coagulation step allows the formation of the polymeric separator membrane on the porous metallic gas diffusion substrate.

A preferred paste is a composition comprising a solution of a pore-forming polymer in a solvent and a dispersion of zirconium oxide particles in the polymer solution.

Suitable pore-forming polymers include polysulphone (PSU), polyvinyl chloride (PVC), polyacrylonitrile (PAN), polyester, polyethersulphone (PES), polyetherketone (PEK), polyetheretherketone (PEEK), polyvinylidene fluoride (PVDF), polyphenylene sulfide (PPS), polyvinyl acetate (PVAc), polyvinyl alcohol (PVA), polyamide (PA), polyvinylpyrrolidone (PVP), crosslinked PVP, cellulosics such as cellulose acetate (CA) and cellulose triacetate (CTA), polycarbonate block polymers, a rubber selected from the group consisting of silicone rubber, polymethylpentene, Chloroprene, SBR, NBR, Urethane, Hypalon®, Neoprene, Nitrile, Buna, Urethane, Epichlorohydrin, Viton®, EPDM, Butyl, Natural Rubber (Latex), acrylrubber, fluoroelastomers and, perfluoroelastomers, and mixtures/blends thereof. Further suitable membrane polymers include chlorinated polyvinyl chloride (CPVC), copolymers of acrylonitrile e.g. with vinyl chloride or ethyl acrylate, polyethylene succinate (PESU), polyurethanes (PU), polyimides (PI), polyetherimide (PEI) and cellulosics such as hydroxypropyl cellulose (HPC), carboxymethyl cellulose (CMC), and cellulose tricarbanilate (CTC) mixtures/blends thereof and their grafted derivatives (sulphonated, acrylated, aminated...).

The pore-forming polymer preferably includes polysulphone (PSU), polyvinylidene fluoride (PVDF), poly(acrylonitrile) (PAN), polyethyleneoxide (PEO), polymethylmethacrylate or copolymers thereof. Polyvinylidene fluoride (PVDF), copolymers of vinylidene fluoride (VDF) and organic polymers composed of primarily of polyvinylidene fluoride are particularly preferred from the point of view of oxidation/reduction-resistance and film-forming properties. Among these, terpolymers of vinylidene fluoride (VDF), hexafluoropropylene (HFP) and chlorotrifluoroethylene (CTFE) are preferred for their excellent swelling property, heat resistance and adhesion to electrodes.

The paste may further comprise a hydrophilizing and stabilizing agent such as polypropylene glycol, ethylene glycol, tripropylene glycol, polyethylene glycol (PEG) such as PEG 8000 and PEG 20000, glycerol, polyhydric alcohols such as glycerine, dibutyl phthalate (DBP), diethyl phthalate (DEP), diundecyl phtalate (DUP), isononanoic acid, and neo decanoic acid can also be incorporated after the phase-inversion process is completed, but before drying. Other suitable hydrophilic polymers include poly(vinyl pyrrolidone) (PVP), crosslinked polyvinylpyrrolidone (PVPP), poly(vinyl alcohol), poly(vinyl acetate), methyl cellulose and polyethylene oxide.

The solvent of the solution of the pore-forming polymer in the paste is preferably a polar solvent. Suitable polar organic solvents include N-methyl-pyrrolidone (NMP), N-ethyl-pyrrolidone (NEP), N,N-dimethylformamide (DMF), formamide, dimethylsulphoxide (DMSO), N,N-dimethylacetamide (DMAC), acetonitrile and mixtures thereof. Films formed by immersion of a polysulphone-NMP solution in water are porous. However, different membrane structures can be obtained upon immersion of a polysulphone-NMP-THF solution in water. Often a variation in solvent mixture will give rise to different film morphologies and hence in membrane performance.

Inorganic particles such as TiO₂, HfO₂, Al₂O₃, ZrO₂, Zr₃(PO₄)₄, Y₂O₃, SiO₂, perovskite oxide materials, siliconcarbide (SiC) and C(Pt/Rh/Ru), with metal oxides and hydroxides being preferred e.g. a titanium oxide can be used and/or added to the paste, alone or in combination. Inorganic oxides and hydroxides have the additional advantage of increasing the ionic conductivity of the ion-permeable separator membrane. Highly preferred materials are zirconium oxide particles.

The paste preferably has a ratio of viscosity at a shear of 1 s⁻¹ to the viscosity at a shear of 100 s⁻¹ at the impregnation temperature of at least 2.0, more preferably at least 2.5, most preferably at least 5. The viscosity ratio can be increased by adding an inorganic pigment or a polymer as thickener.

The phase inversion process is preferably a process wherein a wet layer of the paste, coated on a porous metallic gas diffusion substrate, is treated with a solvent, which is a non-solvent for the pore-forming polymer, to induce coalescence of the polymer and forming a porous structure in the polymeric layer. Coalescence of the polymer can be obtained by contacting the wet paste layer with a non-solvent in the vapour phase and/or by immersing the wet paste layer in a non-solvent in liquid phase. In a preferred process, the wet paste layer is transported through a zone, which is saturated by vapour of a non-solvent, immediately after the coating step, usually followed by immersing the paste layer in a non-solvent liquid. Usually, the solvent of the paste composition and the non-solvent for inducing coalescence are miscible. Coalescence of the polymer by immersing the wet paste layer into a non-solvent in liquid phase is known as coagulation.

The non-solvent can be any solvent wherein the pore-forming polymer has a poor solubility such that the polymer precipitates (or coagulates), more preferably wherein the pore-forming polymer is insoluble. Typically, the non-solvent includes water vapour phase (water vapour or cold steam, preferably at a vapour pressure of 0.02 to 5 bar and particularly preferably at a vapour pressure of 0.05 to 0.2 bar), water, alcohols such as methanol, ethanol, propanol, isopropanol, buthanol, ethylene glycol, tripropylene glycol, polypropylene glycol, 1,3-butanediol, 1,4-butanediol, polyethylene glycol monoethyl ether, and polyhydric alcohols such as glycerol, and a mixture of two or more of them. If a water bath is used as a source of water vapour for the phase inversion, the vapour can be realized by forced convection across the surface of the water bath or by allowing the atmosphere in a closed region above a heated water bath to come into equilibrium with the heated water bath below e.g. overnight. When phase inversion occurs in a water bath, the water should preferably be replaced when the concentration of the solvent removed from the paste in the water reaches 20% by weight. Hence, preferably the phase inversion is a coagulation.

In the coagulation step following immediately after the coating step, the pore formation is induced from both sides of the paste coated porous metallic gas diffusion layer. The pore formation can be split up into two phases: the skin pore formation (outer pores) and bulk pore formation (internal pores). The skin pores are formed by the contact with the non-solvent vapour, followed by coagulation of the pore-forming polymer. The bulk pores are formed by diffusion from the non-solvent into the polymer layer, followed by extraction of the solvent in the paste composition. This gives a wide variety of parameter tools for developing the desired composite or complex pore structures. The use of vapour or liquid during the phase inversion process determines the pore size attainable with pore sizes below 10 µm being obtained with vapour-induced phase separation (VIPS) and pore sizes below 50 nm being obtained with liquid-induced phase separation (LIPS). The choice of separator membrane polymer and pigment also has an influence upon the pore size. It is known that the structure of such separator membranes depends on the speed at which the solvent is removed. This speed is clearly different depending on the choice of non-solvent.

Separator membranes prepared by coating onto the porous metallic gas diffusion layer have the advantage of obtaining a smooth surface and a fine symmetrical pore structure which are sufficiently gastight when saturated with electrolyte to prevent mixing of gases and to avoid the occurrence of gas leakage through the separator membrane.

In an alternative method, separator membrane formation can be performed by evaporation of the solvent (dry phase inversion). The paste may comprise two solvents in which case the solvent having the lower boiling point is evaporated first and a membrane composition is formed. The solvent with the higher boiling point is trapped in the pores of the membrane composition and is evaporated afterwards.

According to a forth aspect of the invention a method is provided to produce an assembly comprising two porous metallic gas diffusion substrates with in between a polymeric separator membrane as in the second aspect of the invention, comprising the steps of
- providing an assembly of a first porous metallic gas diffusion substrate and a polymeric separator membrane by a method as defined in the third aspect of the invention
- while the polymeric separator membrane is still in a wet state after coating it onto the first porous metallic gas diffusion substrate, contacting a second porous metallic gas diffusion substrate onto the side of the polymeric separator
membrane which is opposite to the side that is in contact with the first porous metallic gas diffusion substrate.

It is a benefit of this aspect of the invention that the polymeric separator membrane is in close contact (e.g. via partial penetration of the membrane into a top portion of both porous metallic gas diffusion layers) of the membrane with both porous metallic gas diffusion substrates, leading to increased efficiency of the electrolyser or fuel cell using this assembly. It is another benefit of this aspect of the invention that an assembly of two porous metallic gas diffusion substrates with a polymeric separator membrane in between can be produced in one single continuous process. A catalyst can previously have been applied on the side of the second porous metallic gas diffusion substrate that will be contacted with the polymeric separator.

In a specific embodiment of the forth aspect of the invention, the polymeric separator membrane of the assembly of two porous metallic gas diffusion substrates with in between a polymeric separator membrane is obtained via laminating to each other two assemblies made as in the third aspect of the invention, with the two polymeric separator membrane surfaces facing each other to form one single polymeric separator membrane. The lamination can be performed via thermal lamination (e.g. hot pressing, in a continuous or in a discontinuous way) or by means of the application of an appropriate adhesive.

A fifth aspect of the invention is an alkaline electrolyser or an alkaline fuel cell comprising an assembly of a porous metallic gas diffusion substrate and a polymeric separator membrane as in the first aspect of the invention.

Another aspect of the invention is an alkaline electrolyser or an alkaline fuel cell comprising an assembly of two porous metallic gas diffusion substrates with in between a polymeric separator membrane as in the second aspect of the invention.

### Brief Description of Figures in the Drawings

Figure 1 shows an example of an assembly of a porous metallic gas diffusion substrate and a polymeric separator membrane as in the first aspect of the invention.
Figure 2 shows an example of an assembly of two porous metallic gas diffusion substrates with in between a polymeric separator membrane.
Figure 3 shows an example of a coating and coagulation line as can be used in the invention.

### Mode(s) for Carrying Out the Invention

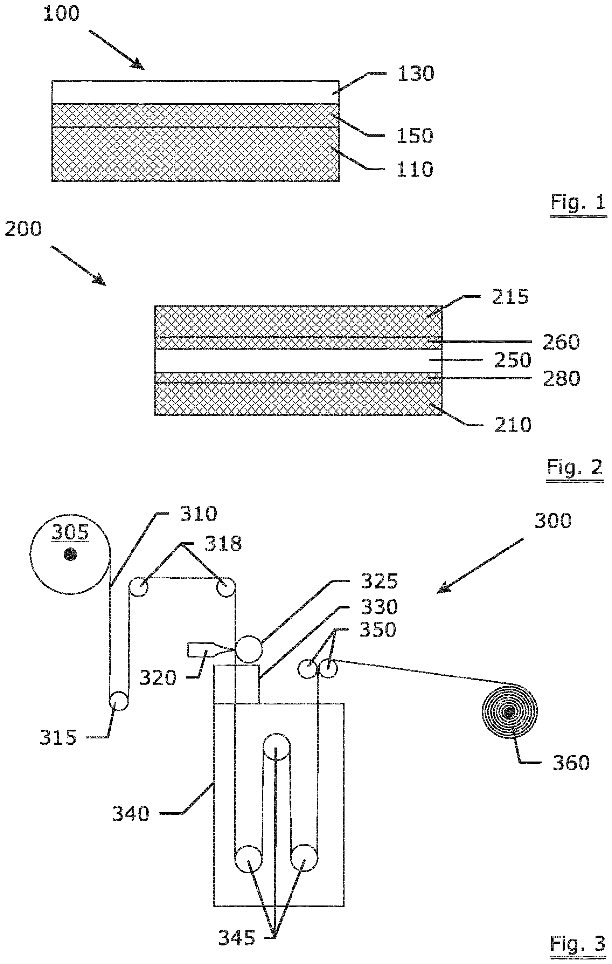

Figure 1 shows an example of an assembly 100 of a porous metallic gas diffusion substrate 110 and a polymeric separator membrane 130 as in the first aspect of the invention. The polymeric separator membrane 130 is penetrating into a top portion 150 of the porous metallic gas diffusion substrate 110.

Figure 2 shows an example of an assembly 200 of two porous metallic gas diffusion substrates 210, 215 with in between a polymeric separator membrane 250 that is penetrating into a top portion 260, 280 of the two porous metallic gas diffusion substrates 210, 215.

An example of a paste that can be used according to the invention to coat a membrane layer onto the porous metallic gas diffusion layer contains 49.07 per cent by weight of Zirconia (e.g. type E101 from MEL-Chemicals), 8.66 per cent by weight of a polysulphone, 1.10 per cent by weight of glycerol; and 41.17 per cent by weight of N-ethyl pyrrolidone (NEP).

Figure 3 shows an example of a coating and coagulation line that can be used to coat a layer of paste on a porous metallic gas diffusion substrate. The coating line 300 comprising a roll 305 from which the porous metallic gas diffusion substrate 310 is unwound. Via a tension compensating roller 315 and guiding rollers 318, the porous metallic gas diffusion substrate 310 is lead through a paste impregnation system, here a pre-metered slot die device 320 that applies the paste to the porous metallic gas diffusion substrate 310 that is supported by a counter roller 325. In chamber 330 a vapour phase (cold steam) is present in which phase inversion of the paste is started. The coated porous metallic gas diffusion layer runs through an immersion bath 340 (and over a number of guiding rollers 345) for further phase inversion and washing of the separator membrane, before it is conveyed by transport rollers 350 to the roll winding unit 360.

Instead of the above described pre-metered slot die system, also a simple doctor blade (or bar) coater with adjustable distance between bar and substrate can be used. In this case, the coated weight is depending on gap distance, rheological properties of paste, coating speed and properties of the substrate. When using the pre-metered slot die, the coating weight depends only on the flow dosed by the feeding pump, the coating width and the coating speed and not on the rheology of the paste or properties of the substrate.

Phase inversion can be realized by inversion, coagulation and washing by immersion in a water bath at a temperature of 60°C to remove the solvents N-ethyl-pyrrolidone and glycerol followed by rinsing. Pore sizes in the range of 50 nm to 100 nm were thereby realized. Finally the resulting porous layers were dried at 40°C for 60 minutes.

Samples of assemblies according to the first aspect of the invention have been made using different porous metal gas diffusion substrates. A first group of porous metallic gas diffusion substrates are sintered stainless steel fiber web comprising two layers. The first layer is 150 gram per square meter of 6.5 µm diameter stainless steel fibers on top of 450 gram per square meter of 8 µm diameter stainless steel fibers. This composition was compressed and sintered into two samples with different porosity values: 60% (having an average pore size of 8 µm) and 80% (having an average pore size of 16 µm).

A second group of porous metallic gas diffusion substrates are sintered stainless steel fiber web comprising two layers. The first layer is 600 gram per square meter of 12 µm diameter stainless steel fibers on top of 450 gram per square meter of 22 µm diameter stainless steel fibers. This composition was compressed and sintered into two samples with different porosity values: 60% (having an average pore size of 15 µm) and 80% (having an average pore size of 30 µm).

A third group of porous metallic gas diffusion substrates are sintered stainless steel fiber web comprising two layers. The first layer is 600 gram per square meter of 22 µm diameter stainless steel fibers on top of 600 gram per square meter of 30 µm diameter stainless steel fibers. This composition was compressed and sintered into two samples with different porosity values: 60% (having an average pore size of 27.5 µm) and 80% (having an average pore size of 55 µm).

Assemblies of porous gas metal diffusion substrates and polymeric separator membranes have been made via coating a suitable paste onto the porous metallic gas diffusion substrates. Samples have been made with a dry coating weight of the separator membrane on the porous gas metal diffusion substrate between 200 and 400 gram per square meter.

A paste has been made comprising the following ingredients:
- 49.07 per cent by weight of Zirconia type E101 from MEL-Chemicals, a zirconium dioxide with an average particle size of 0.658 µm; a specific surface area of 22.26 m²/g; and a pore volume of 0.140 ml/g;
- 8.66 per cent by weight of a polysulphone (P-1800 NT 11 of Solvay);
- 1.10 per cent by weight of glycerol; and
- 41.17 per cent by weight of N-ethyl pyrrolidone (NEP)

The polysulphone (P-1800 NT 11 - Solvay) was first dissolved in a mixture of glycerol and N-ethyl pyrrolidone with stirring over 30 minutes followed by adding the zirconium oxide and stirring for a further 120 minutes.

In order to make the test samples, a similar coating and coagulation set up as described in figure 3 was used, but instead of the dosed slot coating die, a doctor blade with adjustable gap was used.

By adjusting the distance between substrate and the doctor blade, different thicknesses of the paste were applied. Depending also on paste temperature, coating speed, gap provided by the doctor blade and properties of porous metal substrate, different total coating weights of membrane were obtained. Part of the total applied paste was penetrating into the porous substrate depending on the parameters mentioned.

A laboratory electrolyser test set up was built in order to evaluate the assemblies of porous gas metal diffusion substrates and polymeric separator membranes (according to the first aspect of the invention) that have been produced. Potassium hydroxide in water was used as electrolyte. The exposed test sample was a square of 3 cm by 3 cm (or 9 square cm). This test sample (according to the first aspect of the invention) served as the cathode of the electrolyser cell, with the separator membrane facing a platinum coated titanium counter electrode (the anode). An EA source type PS 3016-20B was used to apply an electrical voltage to the anode and cathode of the electrolyser cell with as settings a constant current of 4 Ampere, meaning 0.44 Ampere/ square cm sample surface. The temperature of the electrolyte was controlled and held at 70°C. The electrolyte was stirred in a constant way during the experiments. During the electrolysis experiment at constant current, the total power consumption as well as the volume of produced gas (hydrogen and oxygen) was continuously measured.

Electrolysis experiments with the test samples according to the invention used as cathode have shown to result in a 25 % lower power consumption (measured in Watt) for the same gas production rate (measured in volume of gas produced per unit time) compared to when the test sample (cathode) was replaced with an identical porous metallic gas diffusion substrate which is brought in close contact (through applying pressure) with an identical polymeric separator membrane.

## Claims

1. Assembly (100, 200) of a porous metallic gas diffusion substrate (110, 210) and a polymeric separator membrane (130, 250) for use in an alkaline electrolyser or alkaline fuel cell wherein
- the polymeric separator membrane comprises inorganic hydrophilic particulates dispersed in an organic polymeric binder,
- the polymeric separator membrane is gas tight when filled with electrolyte,
- the polymeric separator membrane is penetrating into at least a top portion (150, 280) of the porous metallic gas diffusion substrate.

2. The assembly (100, 200) as in claim 1, wherein said polymer separator membrane (130, 250) is devoid of a reinforcing web that is incorporated in said polymeric separator membrane or wherein said separator membrane is devoid of a reinforcing fabric that is incorporated in said polymeric separator membrane.

3. The assembly (100, 200) as in claims 1 or 2, wherein said inorganic hydrophilic particulates are zirconium oxide.

4. The assembly (100, 200) as in any of the preceding claims, wherein the porous metallic gas diffusion substrate comprises a sintered or an unsintered metal fiber web, e.g. comprising nickel, titanium, stainless steel, zirconium or fibers of alloys thereof or of any other metal alloy compatible with use in alkaline environments.

5. The assembly as in claim 4, wherein the metallic gas diffusion substrate comprises at least two fiber web layers which have different physical properties.

6. The assembly as in any of the preceding claims, wherein the two sides of the metallic gas diffusion substrate have a different average pore size and wherein the polymeric separator membrane is positioned on the side of the metallic gas diffusion substrate with the smallest average pore size.

7. The assembly (200) as in any of the preceding claims, further comprising a second porous metallic gas diffusion substrate (215) wherein the polymeric separator membrane (250) is positioned in between both metallic gas diffusion substrates (210, 215).

8. A method for the production of an assembly (100) as defined in any of claims 1 to 6, comprising the steps of
- providing a porous metallic gas diffusion substrate (310),
- coating a paste comprising a polymer binder and inorganic hydrophilic particles dispersed therein onto said porous metallic gas diffusion substrate (310).

9. The method as in claim 8, wherein the paste comprises a solvent and wherein the method comprises the additional step of evaporating at least part of the solvent of the paste after coating said paste onto the porous metallic gas diffusion substrate.

10. The method as in claims 8 or 9, wherein the method comprises the additional step of coagulating said paste after coating it onto said porous metallic gas diffusion substrate (310).

11. A method to produce an assembly as defined in claim 7, comprising the steps of
- providing an assembly of a first porous metallic gas diffusion substrate and a polymeric separator membrane by a method as defined in any of claims 8 to 10,
- while the polymeric separator membrane is still in a wet state after coating it onto the first porous metallic gas diffusion substrate, contacting a second porous metallic gas diffusion substrate onto the side of said polymeric separator membrane which is opposite to the side that is in contact with the first porous metallic gas diffusion substrate.

12. Method to produce an assembly as defined in claim 7, comprising the steps of
- providing a first assembly of a porous metallic gas diffusion substrate and a polymeric separator membrane by a method as defined in any of claims 8 to 10,
- providing a second assembly of a porous metallic gas diffusion substrate and a polymeric separator membrane by a method as defined in any of claims 8 to 10,
- laminating the first and second assembly together, with the two polymeric separator membrane surfaces facing each other to form one single polymeric separator membrane.

13. Alkaline electrolyser or alkaline fuel cell;
- comprising an assembly of a porous metallic gas diffusion substrate and a polymeric separator membrane as defined in any of claims 1 to 6; or
- comprising an assembly of two porous metallic gas diffusion substrates with in between a polymeric separator membrane as defined in claim 7.

## Patentansprüche

1. Anordnung (100, 200) eines porösen Metallgasdiffusionssubstrats (110, 210) und einer polymeren Separatormembran (130, 250) zur Verwendung in einem alkalischen Elektrolyseur oder alkalischen Brennstoffzelle, wobei
- die polymere Separatormembran anorganische, hydrophile, in einem organischen polymeren Bindemittel dispergierte Partikel enthält,
- die polymere Separatormembran bei Befüllung mit Elektrolyt gasdicht ist,
- die polymere Separatormembran in mindestens einen obersten Bereich (150, 280) des porösen Metallgasdiffusionssubstrats hineindringt.

2. Die Anordnung (100, 200) nach Anspruch 1, wobei die polymere Separatormembran (130, 250) keine in die polymere Separatormembran eingearbeitete Verstärkungsbahn umfasst oder wobei die Separatormembran kein in die polymere Separatormembran eingearbeitetes Verstärkungsgewebe umfasst.

3. Die Anordnung (100, 200) nach den Ansprüchen 1 oder 2, wobei die anorganischen hydrophilen Partikel Zirconiumoxidpartikel sind.

4. Die Anordnung (100, 200) nach einem der vorstehenden Ansprüche, wobei das poröse Metallgasdiffusionssubstrat eine gesinterte oder ungesinterte Metallfaserbahn umfasst, die zum Beispiel Nickel, Titan, rostfreien Stahl, Zirconium oder Fasern von Legierungen derselben oder einer beliebigen anderen, zur Verwendung in alkalischen Umgebungen kompatiblen Metalllegierung umfasst.

5. Die Anordnung nach Anspruch 4, wobei das Metallgasdiffusionssubstrat mindestens zwei Faserbahnschichten mit unterschiedlichen physikalischen Eigenschaften umfasst.

6. Die Anordnung nach einem der vorstehenden Ansprüche, wobei die zwei Seiten des Metallgasdiffusionssubstrats eine unterschiedliche mittlere Porengröße aufweisen und wobei die polymere Separatormembran auf der Seite des Metallgasdiffusionssubstrats mit der niedrigsten mittleren Porengröße vorliegt.

7. Die Anordnung (200) nach einem der vorstehenden Ansprüche, die ferner ein zweites poröses Metallgasdiffusionssubstrat (215) umfasst, wobei die polymere Separatormembran (250) zwischen beiden Metallgasdiffusionssubstraten (210, 215) vorliegt.

8. Ein Verfahren zur Herstellung einer wie nach einem der Ansprüche 1 bis 6 definierten Anordnung (100), umfassend die folgenden Schritte:
- Bereitstellen eines porösen Metallgasdiffusionssubstrats (310),
- Beschichten des porösen Metallgasdiffusionssubstrats (310) mit einer Paste, die ein polymeres Bindemittel und darin dispergierte anorganische hydrophile Partikel enthält.

9. Das Verfahren nach Anspruch 8, wobei die Paste ein Lösungsmittel enthält und wobei das Verfahren den zusätzlichen Schritt, in dem anschließend an die Beschichtung des porösen Metallgasdiffusionssubstrats mit der Paste mindestens ein Teil des Lösungsmittels der Paste abgedampft wird, umfasst.

10. Das Verfahren nach den Ansprüchen 8 oder 9, wobei das Verfahren den zusätzlichen Schritt, in dem anschließend an die Beschichtung des porösen Metallgasdiffusionssubstrats (310) mit der Paste die Paste koaguliert wird, umfasst.

11. Ein Verfahren zur Herstellung einer wie in Anspruch 7 definierten Anordnung, umfassend die folgenden Schritte:
- Bereitstellen einer Anordnung eines ersten porösen Metallgasdiffusionssubstrats und einer polymeren Separatormembran gemäß einem wie nach einem der Ansprüche 8 bis 10 definierten Verfahren,
- während die polymere Separatormembran noch nass ist, nachdem das erste poröse Metallgasdiffusionssubstrat mit dieser polymeren Separatormembran beschichtet worden ist, Inberührungbringen eines zweiten porösen Metallgasdiffusionssubstrats auf der Seite der polymeren Separatormembran, welche der das erste poröse Metallgasdiffusionssubstrat berührenden Seite gegenüberliegt.

12. Verfahren zur Herstellung einer wie in Anspruch 7 definierten Anordnung, umfassend die folgenden Schritte:
- Bereitstellen einer ersten Anordnung eines porösen Metallgasdiffusionssubstrats und einer polymeren Separatormembran gemäß einem wie nach einem der Ansprüche 8 bis 10 definierten Verfahren,
- Bereitstellen einer zweiten Anordnung eines porösen Metallgasdiffusionssubstrats und einer polymeren Separatormembran gemäß einem wie nach einem der Ansprüche 8 bis 10 definierten Verfahren,
- Verlaminieren der ersten und zweiten Anordnung, wobei die zwei polymeren Separatormembranoberflächen einander zugewandt sind, zur Bildung einer einzelnen polymeren Separatormembran.

13. Alkalischer Elektrolyseur oder alkalische Brennstoffzelle, umfassend:
- eine wie nach einem der Ansprüche 1 bis 6 definierte Anordnung eines porösen Metallgasdiffusionssubstrats und einer polymeren Separatormembran, oder
- eine wie in Anspruch 7 definierte Anordnung zweier poröser Metallgasdiffusionssubstrate mit einer dazwischen befindlichen polymeren Separatormembran.

## Revendications

1. Assemblage (100, 200) d'un substrat de diffusion de gaz de métal poreux (110, 210) et d'une membrane de séparation polymère (130, 250) pour utilisation dans un électrolyseur alcalin ou une pile à combustible alcaline, **caractérisé en ce que**
- la membrane de séparation polymère contient des particules hydrophiles, inorganiques, dispersées dans un liant polymère organique,
- la membrane de séparation polymère est étanche au gaz lorsqu'elle est remplie d'électrolyte,
- la membrane de séparation polymère pénètre dans au moins une zone supérieure (150, 280) du substrat de diffusion de gaz de métal poreux.

2. Assemblage (100, 200) selon la revendication 1, **caractérisé en ce que** la membrane de séparation polymère (130, 250) ne comprend pas de bande de renforcement incorporée dans la membrane de séparation polymère ou que ladite membrane de séparation ne comprend pas de tissu de renforcement incorporé dans la membrane de séparation polymère.

3. Assemblage (100, 200) selon les revendications 1 ou 2, **caractérisé en ce que** les particules hydrophiles inorganiques sont des particules d'oxyde de zirconium.

4. Assemblage (100, 200) selon l'une quelconque des revendications précédentes, **caractérisé en ce que** le substrat de diffusion de gaz de métal poreux comprend une bande de fibre métallique frittée ou non frittée comprenant, par exemple, du nickel, du titane, de l'acier inoxydable, du zirconium ou des fibres d'alliages de ceux-ci ou d'un quelconque autre alliage de métaux compatible pour être utilisé dans des milieux alcalins.

5. Assemblage selon la revendication 4, **caractérisé en ce que** le substrat de diffusion de gaz de métal comprend au moins deux couches de bande de fibres ayant différentes propriétés physiques.

6. Assemblage selon l'une quelconque des revendications précédentes, **caractérisé en ce que** les deux côtés du substrat de diffusion de gaz de métal présentent une taille de pores moyenne différente et que la membrane de séparation polymère se situe sur le côté du substrat de diffusion de gaz de métal ayant la plus petite taille de pores moyenne.

7. Assemblage (200) selon l'une quelconque des revendications précédentes comprenant en outre un deuxième substrat de diffusion de gaz de métal poreux (215), ladite membrane de séparation polymère (250) se situant entre les deux substrats de diffusion de gaz de métal (210, 215).

8. Procédé pour la fabrication d'un assemblage (100) tel que défini selon l'une quelconque des revendications 1 à 6, comprenant les étapes consistant à:
- mettre à disposition un substrat de diffusion de gaz de métal poreux (310),
- enduire le substrat de diffusion de gaz de métal poreux (310) d'une pâte contenant un liant polymère et des particules hydrophiles inorganiques dispersées dans ledit liant.

9. Procédé selon la revendication 8, **caractérisé en ce que** la pâte contient un solvant et que le procédé comprend l'étape supplémentaire consistant à évaporer au moins une partie du solvant de la pâte après en avoir enduit le substrat de diffusion de gaz de métal poreux.

10. Procédé selon les revendications 8 ou 9, **caractérisé en ce que** le procédé comprend l'étape supplémentaire consistant à coaguler la pâte après en avoir enduit le substrat de diffusion de gaz de métal poreux (310).

11. Procédé pour la fabrication d'un assemblage tel que défini selon la revendication 7, comprenant les étapes consistant à:
- mettre à disposition un assemblage d'un premier substrat de diffusion de gaz de métal poreux et d'une membrane de séparation polymère selon un procédé tel que défini selon l'une quelconque des revendications 8 à 10,
- lorsque la membrane de séparation polymère est encore humide après en avoir enduit le premier substrat de diffusion de gaz de métal poreux, mettre en contact un deuxième substrat de diffusion de gaz de métal poreux sur le côté de la membrane de séparation polymère opposé au côté étant en contact avec le premier substrat de diffusion de gaz de métal poreux.

12. Procédé pour la fabrication d'un assemblage tel que défini selon la revendication 7, comprenant les étapes consistant à:
- mettre à disposition un premier assemblage d'un substrat de diffusion de gaz de métal poreux et d'une membrane de séparation polymère selon un procédé tel que défini selon l'une quelconque des revendications 8 à 10,
- mettre à disposition un deuxième assemblage d'un substrat de diffusion de gaz de métal poreux et d'une membrane de séparation polymère selon un procédé tel que défini selon l'une quelconque des revendications 8 à 10,
- laminer entre eux les premier et deuxième assemblages, les surfaces des deux membranes de séparation polymères étant orientées l'une vers l'autre afin de former une seule membrane de séparation polymère.

13. Électrolyseur alcalin ou pile à combustible alcaline, comprenant:
- un assemblage d'un substrat de diffusion de gaz de métal poreux et d'une membrane de séparation polymère tel que défini selon l'une quelconque des revendications 1 à 6, ou
- un assemblage de deux substrats de diffusion de gaz de métal poreux comprenant une membrane de séparation polymère entre les deux substrats, tel que défini selon la revendication 7.
